## Europäisches Patentamt

## European Patent Office

## Office européen des brevets

(19)

(11) Veröffentlichungsnummer: **0 100 535**
**A2**

(12)

# EUROPÄISCHE PATENTANMELDUNG

(21) Anmeldenummer: **83107461.2**

(22) Anmeldetag: **28.07.83**

(51) Int. Cl.³: **H 04 L 11/00**

(30) Priorität: **30.07.82 DE 3228550**

(43) Veröffentlichungstag der Anmeldung:
**15.02.84 Patentblatt 84/7**

(84) Benannte Vertragsstaaten:
**AT CH IT LI SE**

(71) Anmelder: **SIEMENS AKTIENGESELLSCHAFT**
**Berlin und München Wittelsbacherplatz 2**
**D-8000 München 2(DE)**

(72) Erfinder: **Albert, Klaus, Dipl.-Phys.**
**Eichfeldstrasse 4**
**D-8033 Krailling(DE)**

(72) Erfinder: **Schröder, Eckhard, Dipl.-Ing.**
**Irschenhausener Strasse 17**
**D-8000 München 70(DE)**

(54) **Schaltungsanordnung zur Aufnahme und Weiterleitung von mit relativ hoher Geschwindigkeit auftretenden Datensignalen in einem Datenvermittlungsnetz.**

(57) Bei einer an eine Datenvermittlungsanlage anschließbaren Koppeleinrichtung (K) zur Aufnahme von auf Hochgeschwindigkeits-Zubringerleitungen (NKan1 bis NKanx) auftretenden Datensignalen und Weiterleitung dieser Datensignale über Hochgeschwindigkeits-Abnehmerleitungen (NKab1 bis NKabx) ist zur Vermittlung der Datensignale ein Durchschaltespeicher (DS) vorgesehen, der zum Adressieren seiner Speicherplätze und zum Wirksamschalten der in Frage kommenden Hochgeschwindigkeits-Abnehmerleitungen eingangsseitig mit einem Eingabecodierer (ECW) und ausgangsseitig mit einem Ausgabecodierer (ACW) verbunden ist. Der genannte Eingabecodierer (ECW) ist eingangsseitig mit einer an einer zyklisch arbeitenden Leitungsabfrageanordnung (Mul) angeschlossenen Speicheranordnung (ESP) verbunden, in der die durch die Leitungsabfrageanordnung aufgenommenen Datensignale zu mehrere Bitgruppen umfassenden parallelen Datensignalzeichen leitungsindividuell aufgesammelt werden und die jeweils erst nach Eintreffen der letzten zu einem Datensignalzeichen gehörenden Bitgruppe dem Eingabecodierer (ECW) das vollständige Datensignalzeichen zur weiteren Bearbeitung bereitstellt.

./...

SIEMENS AKTIENGESELLSCHAFT
Berlin und München

Unser Zeichen 0100535
VPA

82 P 1 6 0 5 E

Schaltungsanordnung zur Aufnahme und Weiterleitung von mit relativ hoher Geschwindigkeit auftretenden Datensignalen in einem Datenvermittlungsnetz

Die Erfindung betrifft eine Schaltungsanordnung zur Aufnahme von mit relativ hoher Geschwindigkeit auf Hochgeschwindigkeits-Zubringerleitungen auftretenden Datensignalen und Weiterleitung dieser Datensignale über Hochgeschwindigkeits-Abnehmerleitungen in einem wenigstens eine Zeitvielfach-Datenvermittlungsanlage umfassenden Datenvermittlungsnetz, in welchem jeder Zeitvielfach-Datenvermittlungsanlage eine gesonderte Koppeleinrichtung zugehörig ist, über die die genannten Datensignale vermittelt werden und die dazu von einer Steuereinrichtung ihrer Zeitvielfach-Datenvermittlungsanlage steuerbar ist, über welche im Zuge der jeweiligen Datensignalverbindung mit relativ niedriger Geschwindigkeit auftretende Signalisierungsinformationen vermittelt werden, wobei die Koppeleinrichtung einen Durchschaltespeicher mit den Hochgeschwindigkeits-Zubringerleitungen individuell zugeordneten Speicherplätzen aufweist, in die von der Steuereinrichtung der zugehörigen Zeitvielfach-Datenvermittlungsanlage jeweils eine Adresse einer für eine Datensignalaufnahme in Frage kommenden Hochgeschwindigkeits-Abnehmerleitung einschreibbar ist, und wobei im Zuge der Vermittlung von mit der hohen Geschwindigkeit auftretenden Datensignalen lediglich der der jeweiligen Hochgeschwindigkeits-Zubringerleitung zugeordnete Speicherplatz des Durchschaltespeichers angesteuert und durch Bereitstellung der in dem betreffenden Speicher enthaltenen Adresse die für eine Datensignalauf-

Kzr 1 Gru / 22.07.1982

nahme in Frage kommende Hochgeschwindigkeits-Abnehmerleitung wirksam geschaltet wird.

Bei der vorstehend bezeichneten Schaltungsanordnung ist der Durchschaltespeicher zur Adressierung seiner Speicherplätze am Ausgang eines Eingabecodierers angeschlossen, der ausgangsseitig den mit ihm verbundenen Hochgeschwindigkeits-Zubringerleitungen entsprechende Adressensignale abzugeben vermag, und der Durchschaltespeicher ist ausgangsseitig mit dem Eingang eines Ausgabecodierers verbunden, der auf eine Adressierung durch die von dem Durchschaltespeicher abgegebenen Adressen hin die für die Weiterleitung von Datensignalen zu benutzenden Hochgeschwindigkeits-Abnehmerleitungen wirksam zu schalten gestattet.

Die maximale Anzahl der gleichzeitig über die vorstehend genannte Koppeleinrichtung in Datensignalverbindungen einbezogenen Hochgeschwindigkeits-Zubringerleitungen wird im wesentlichen durch die Anzahl der pro Zeiteinheit von dem Eingabecodierer bearbeitbaren Datensignale begrenzt.

Es ist nun Aufgabe der vorliegenden Erfindung, die Schaltungsanordnung der eingangs genannten Art so auszubilden, daß die Anzahl der                gleichzeitig über die Koppeleinrichtung in Datensignalverbindungen eingezogenen Hochgeschwindigkeits-Zubringerleitungen und Hochgeschwindigkeits-Abnehmerleitungen erhöht werden kann.

Gelöst wird die vorstehend aufgezeigte Aufgabe bei einer Schaltungsanordnung der eingangs genannten Art erfindungsgemäß dadurch, daß der Eingabecodierer eingangsseitig mit einer an einer zyklisch arbeitenden Leitungsabfrageanordnung angeschlossenen Speicheranordnung verbunden ist, in der die durch die Leitungsabfrageanordnung von den in Datensignalverbindungen einbezogenen Hochgeschwindigkeits-Zubringerleitungen her aufgenommenen Datensignale zu meh-

0100535
82 P 1605 E

rere Bitgruppen umfassenden parallelen Datensignalzeichen leitungsindividuell aufgesammelt werden und die jeweils erst nach Eintreffen der letzten zu einem Datensignalzeichen gehörenden Bitgruppe dem Eingabecodierer das vollständige Datensignalzeichen zur Weiterleitung an die in Frage kommende Hochgeschwindigkeits-Abnehmerleitung bereitstellt.

Die Erfindung bringt den Vorteil mit sich, daß der Umfang der von dem Eingabecodierer für jede an einer Datensignalverbindung beteiligte Hochgeschwindigkeits-Zubringerleitung auszuführenden Bearbeitungsvorgänge reduziert werden kann. Damit ist bei gleichbleibender Bearbeitungsgeschwindigkeit des Eingabecodierers eine größere Anzahl von Datensignalen gleichzeitig über die Koppeleinrichtung vermittelbar.

Zweckmäßige Ausgestaltungen der Schaltungsanordnung gemäß der Erfindung ergeben sich aus den Unteransprüchen.

Anhand von Zeichnungen wird die Erfindung nachstehend beispielsweise näher erläutert.

Fig. 1 zeigt in einem Blockschaltbild eine Schaltungsanordnung, bei der die Erfindung angewandt ist,
Fig. 2 zeigt in einem Blockschaltbild den näheren Aufbau einer Speicheranordnung gemäß der Erfindung,
Fig. 3 zeigt ein Diagramm, auf das im Zuge der Erläuterung der Erfindung eingegangen wird.

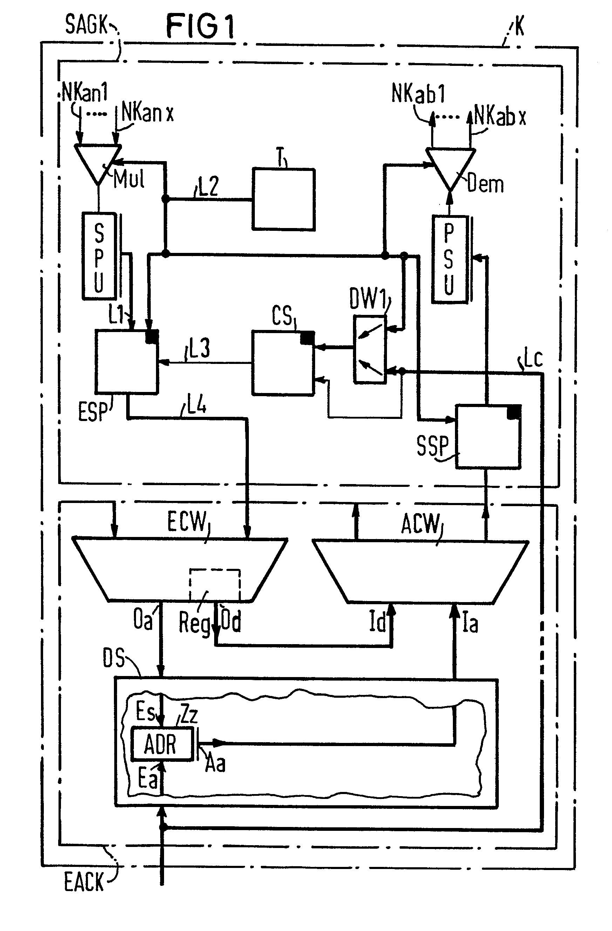

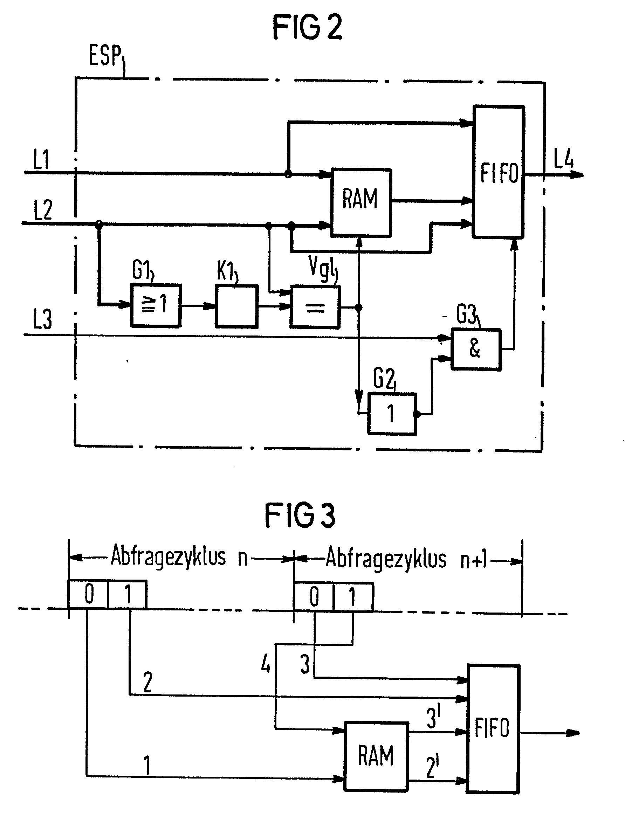

In Fig. 1 ist eine mögliche Realisierungsform einer Koppeleinrichtung K gezeigt, in welcher mit relativ hoher Geschwindigkeit auf Hochgeschwindigkeits-Zubringerleitungen auftretende Datensignale vermittelbar sind. Die Koppeleinrichtung K enthält eine Verbindungssteuerschaltung EACK und eine Anschlußschaltung SACK. Die Verbindungssteuerschaltung EACK ist hinsichtlich des Aufbaues des Eingabecodierers ECW mit seinem Register ·Reg und den Anschlüssen
Oa, Od, hinsichtlich des Ausgabecodierers ACW mit seinen
Anschlüssen Ia, Id und hinsichtlich des Durchschaltespeichers DS mit den Zubringerzellen Zz und den Anschlüssen
Ea,Es, Aa identisch mit der gleich bezeichneten Verbindungssteuerschaltung gemäß Fig. 2 der europäischen Patentanmeldung 0 058 758.

Die Anschlußschaltung SAGK umfaßt eine Leitungsabfrageanordnung (Multiplexer) Mul, die eingangsseitig mit Übertragungsleitungen NKan1 bis NKanx verbunden ist, über die
Datensignale mit der relativ hohen Geschwindigkeit von
beispielsweise 64 kbit/s übertragen werden können. Diese
Leitungsabfrageanordnung Mul, die zyklisch betrieben wird,
ist ausgangsseitig mit dem Eingang eines Serien-Parallel-
Umsetzer SPU verbunden, der im vorliegenden Fall dazu
dient, die der Leitungsabfrageanordnung Mul zugeführten
und von dieser abgegebenen seriell auftretenden Datensignalbits in ein Parallelformat umzusetzen. Die Umsetzung
erfolgt dabei in der Weise, daß am Ausgang des Serien-
Parallel-Umsetzers SPU eine aus acht Datensignalbits bestehende Bitgruppe für die weitere Bearbeitung zur Verfügung steht. Eine solche Bitgruppe wird im folgenden auch
als Oktett bezeichnet.

Mit den Parallelausgängen des Serien-Parallel-Umsetzers
SPU sind über die Leitungsanordnung L1 Dateneingänge
einer Speicheranordnung ESP verbunden, die in Fig. 2 detaillierter dargestellt ist. Die Leitungsanordnung L1
stellt bei diesem Ausführungsbeispiel entsprechend der zu
einer Bitgruppe gehörenden Anzahl von einzelnen Datensignalbits ein System von acht parallelen Einzelleitungen dar.

Adreßeingänge dieser Speicheranordnung ESP und Steuereingänge der Leitungsabfrageanordnung Mul sind über
die Leitungsanordnung L2 mit Ausgängen einer zyklisch arbeitenden Zähleranordnung T verbunden. Die Speicheranordnung ESP ist außerdem mit einem Steuereingang an einem Steuerspeicher CS angeschlossen, in welchem Markierungssignale, beispielsweise in Form einzelner Bits bezüglich derjenigen Übertragungsleitungen NKan1 bis NKanx eingetragen sein können, über die Datensignale zugeführt werden bzw. die in Datensignalverbindungen einbezogen sind.

Mit ihrer Ausgangsseite ist die Speicheranordnung ESP über die Leitungsanordnung L4 mit der Eingangsseite der Verbindungssteuerschaltung EACK verbunden. Die Leitungsanordnung L4 stellt wiederum ein System von Einzelleitungen dar, über welche unter anderem gleichzeitig zwei Oktette (Bitgruppen) zu dem Eingabecodierer ECW hin übertragbar sind.

Wie bereits erwähnt, sind die Leitungsabfrageanordnung Mul und die Speicheranordnung ESP über die Leitungsanordnung L2 mit der Zähleranordnung T verbunden. Über diese Leitungsanordnung L2 werden zyklisch Zählerstände übertragen, die in der Leitungsabfrageanordnung Mul die zyklische Abfrage der Hochgeschwindigkeits-Zubringerleitungen darstellenden Übertragungsleitungen NKan1 bis NKanx steuern. Hierzu ist jeder Hochgeschwindigkeits-Zubringerleitung ein bestimmter Zählerstand zugeordnet. Im vorliegenden Fall sind 128 Hochgeschwindigkeits-Zubringerleitungen an die Leitungsabfrageanordnung Mul angeschlossen. Die den einzelnen Hochgeschwindigkeits-Zubringerleitungen zugeordneten Zählerstände der Zähleranordnung T werden entsprechend der genannten Anzahl auf sieben parallelen Einzelleitungen der Leitungsanordnung L2 bereitgestellt. Die für die einzelnen Hochgeschwindigkeits-Zubringerleitungen bereitgestellten Zählerstände werden im folgenden auch als interne Leitungsnummern bezeichnet. Mit Hilfe dieser internen Lei-

tungsnummern werden gleichzeitig in der Speicheranordnung ESP den einzelnen Hochgeschwindigkeits-Zubringerleitungen zugeordnete Speicherplätze angesteuert, um die von dem Serien-Parallel-Umsetzer SPU bereitgestellten Oktette leitungsindividuell zwischenzuspeichern.

Außerdem dienen die gerade genannten internen Leitungsnummern zur Adressierung des Steuerspeichers CS, in dessen durch die internen Leitungsnummern adressierbaren Speicherplätzen den Datenübertragungszustand kennzeichnende Markierungssignale für die jeweiligen Hochgeschwindigkeits-Zubringerleitungen hinterlegt sind. Die internen Leitungsnummern werden dabei über eine Datenweiche DW1 an diesen Steuerspeicher herangeführt. Die Datenweiche DW1 ist mit einem weiteren Dateneingang über die Leitungsanordnung Lc mit der Verbindungssteuerschaltung EACK verbunden. Die Verbindungssteuerschaltung EACK steuert über diese Leitungsanordnung Lc Schreibzyklen innerhalb des Steuerspeichers CS zur Aktualisierung der den einzelnen Hochgeschwindigkeits-Zubringerleitungen zugeordneten Markierungssignale.Die Leitungsanordnung Lc stellt dabei ein System von Einzelleitungen dar, die Adreßsignale zur Adressierung der einzelnen Speicherplätze des Steuerspeichers CS und das jeweils abzuspeichernde aktuelle Markierungssignal führen.

An dem mit der Verbindungssteuerschaltung EACK verbundenen Eingang der Anschlußschaltung SAGK ist eine weitere Speicheranordnung SSP vorgesehen, die ausgangsseitig mit einem Parallel-Serien-Umsetzer PSU verbunden ist. Dadurch ist es möglich, die der Verbindungssteuerschaltung EACK von der Anschlußschaltung SAGK zuvor im Parallelformat zugeführten Datensignale wieder in das ursprüngliche Serienformat umzusetzen, bevor die betreffenden Datensignale wieder weitergeleitet werden.

Die Weiterleitung der betreffenden Datensignale erfolgt vom Ausgang des Parallel-Serien-Umsetzers PSU über eine Leitungswählschaltung (Demultiplexer) Dem, die ausgangsseitig mit Hochgeschwindigkeits-Abnehmerleitungen NKab1 bis NKabx verbunden ist. In der Speicheranordnung SSP ist wieder jeder an der Leitungswählschaltung Dem angeschlossenen Hochgeschwindigkeits-Abnehmerleitung ein fester Speicherplatz zugeordnet. Das Auslesen der einzelnen Speicherplätze und das Wirksamschalten der zugehörigen Hochgeschwindigkeits-Abnehmerleitungen wird dabei von der Zähleranordnung T gesteuert (Leitungsanordnung L2).

In Fig. 2 ist eine mögliche Realisierungsform der in Fig. 1 angedeuteten Speicheranordnung ESP dargestellt. Die Speicheranordnung ESP umfaßt einen ersten Speicher RAM mit wahlfreiem Zugriff, der eingangsseitig an die die Bitgruppen führende Leitungsanordnung L1 und an die die internen Leitungsnummern führende Leitungsanordnung L2 angeschlossen ist. Ausgangsseitig ist dieser erste Speicher RAM mit einem als Durchlaufspeicher ausgebildeten zweiten Speicher FIFO verbunden. An diesen zweiten Speicher FIFO sind außerdem eingangsseitig die genannten Leitungsanordnungen L1 und L2 herangeführt. Ausgangsseitig ist schließlich dieser zweite Speicher FIFO durch die Leitungsanordnung L4 mit dem Eingabecodierer ECW der Verbindungssteuerschaltung EACK verbunden.

Mit der Leitungsanordnung L2 ist außerdem ein ODER-Glied G1 verbunden. Dieses ODER-Glied G1 liefert immer dann für eine nachgeschaltete bistabile Kippstufe K1 ein Steuersignal, wenn auf sämtlichen Leitungen der Leitungsanordnung L2 ein Logisch-O-Pegel übertragen wird, d.h. wenn durch die interne Leitungsnummer "O" der Beginn eines neuen Abfragezyklus angezeigt wird. Mit jedem an die Kippstufe 1 abgegebenen Steuersignal wird deren Ausgangspegel invertiert. Das jeweils von der Kippstufe K1 abgegebene Ausgangssignal wird anschließend einem Vergleicher Vgl zugeführt. Ein weiterer Eingang des Vergleichers Vgl ist an die das niederwertigste Adreßbit führende Leitung der Leitungsanordnung L2 angeschlossen. Der Vergleicher Vgl gibt immer dann ein Steuersignal ab, wenn die an seinen Eingängen anliegenden logischen Pegel gleich sein.

Mit dem genannten Ausgangssignal des Vergleichers Vgl werden Schreib- und Lesezyklen in dem ersten Speicher RAM gesteuert. Auf diese Weise ist es möglich, daß in einem Abfragezyklus entweder nur für die Leitungen mit einer geraden internen Leitungsnummer oder nur für die Leitungen mit einer ungeraden internen Leitungsnummer ein Schreibzyklus in dem ersten Speicher RAM durchgeführt wird. Bei einem solchen Schreibzyklus wird die gerade über die Leitungsanordnung L1 übertragene Bitgruppe (Oktett) in eine durch die interne Leitungsnummer, die gleichzeitig auf der Leitungsanordnung L2 anliegt, bezeichnete Speicherzelle eingeschrieben. Ergibt der Vergleichsvorgang in dem Vergleicher Vgl, daß die Signale an dessen Eingang nicht miteinander übereinstimmen, so wird für die durch die gerade vorliegende interne Leitungsnummer bezeichnete Hochgeschwindigkeits-Zubringerleitung ein Lesezyklus durchgeführt.Das dabei vom Ausgang des ersten Speichers RAM abgegebene Oktett wird zusammen mit dem gerade über die Leitungsanordnung L1 übertragenen Oktett dem zweiten Speicher FIFO zugeführt.

Der Ausgang des genannten Vergleichers Vgl ist außerdem mit einem Inverter G2 verbunden. Ausgangsseitig ist dieser Inverter G2 an einem Eingang eines UND-Gliedes G3 angeschlossen, dessen Ausgang mit einem Steuereingang des zweiten Speichers FIFO verbunden ist. Über die zuletzt genannten Schaltungselemente läßt sich der zweite Speicher FIFO immer dann zur Datenaufnahme (Schreibbetrieb) bereitschalten, wenn für die zu bearbeitende Hochgeschwindigkeits-Zubringerleitung gerade in dem ersten Speicher RAM ein Lesezyklus durchgeführt wird.

Um den gerade erwähnten Schreibvorgang bei dem zweiten Speicher FIFO zu steuern, ist das UND-Glied G3 mit einem weiteren Eingang über die Leitung L3 am Ausgang des Steuerspeichers CS angeschlossen. Durch diese Verknüpfung wird das genannte UND-Glied nur dann in den übertragungsfähigen Zustand gesteuert, wenn durch die von dem Steuerspeicher CS für die betreffende Leitung abgegebenen Markierungsbits signalisiert wird, daß die betreffende Leitung in eine Datensignalverbindung einbezogen ist. Für Leitungen (Hochgeschwindigkeits-Zubringerleitungen), die nicht in eine Datensignalverbindung einbezogen sind, ist der zweite Speicher FIFO für die Aufnahme von weiterzuleitenden Bitgruppen gesperrt.

Nachdem zuvor der Aufbau der in den Zeichnungen dargestellten Anordnungen erläutert worden ist, sei nunmehr die Arbeitsweise der Schaltungsanordnung gemäß der Erfindung näher erläutert. Dabei wird im wesentlichen die Arbeitsweise der Speicheranordnung ESP betrachtet, da die Arbeitsweisen der übrigen an der Weiterleitung von Datensignalen beteiligten Schaltungsteile bereits in der *) dargestellt worden sind. Für die weitere Betrachtung sei angenommen, daß die durch interne Leitungsnummern bezeichneten Hochgeschwindigkeits-Zubringerleitungen in Datensignalverbindungen einbezogen sind. Für diese Leitungen sind in dem Steuerspeicher CS entsprechende Markierungsbits gespeichert. Die Speicherung dieser Markierungsbits erfolgt übrigens durch Steuersignale, die nach Abschluß des Verbindungsaufbaues über die Leitungsanordnung Lc zu dem Steuerspeicher CS hin *) oben erwähnten europäischen Patentanmeldung

BAD ORIGINAL

0100535

übertragen werden.

Die bei der Abfrage der einzelnen Hochgeschwindigkeits-Zubringerleitungen von der Leitungsabfrageanordnung Mul aufgenommenen Datensignale werden, wie bereits oben erwähnt, durch den Serien-Parallel-Umsetzer SPU in parallele Bitgruppen (Oktette) umgesetzt. Die Auswahl der einzelnen Hochgeschwindigkeits-Zubringerleitungen erfolgt dabei durch die von der Zähleranordnung T abgegebenen internen Leitungsnummern. Die gleichen internen Leitungsnummern werden der nachgeschalteten Speicheranordnung ESP zur Adressierung ihrer Speicherplätze bereitgestellt.

Zur weiteren Darstellung der Abläufe innerhalb der Speicheranordnung ESP werden unter Bezugnahme auf Fig. 3 zwei aufeinanderfolgende Abfragezyklen (Abfragezyklus n und Abfragezyklus n+1) für die Hochgeschwindigkeits-Zubringerleitungen mit den internen Leitungsnummern "0" und "1" betrachtet. Dazu sei angenommen, daß bei dem in Fig. 3 dargestellten Abfragezyklus n die für Leitungen mit einer geraden internen Leitungsnummer bereitgestellten Oktette in die durch die jeweiligen internen Leitungsnummern adressierten Speicherplätze des ersten Speichers RAM übernommen werden. Bei dem betrachteten Fall trifft dies auch für die Hochgeschwindigkeits-Zubringerleitung mit der internen Leitungsnummer "0" zu. In Fig. 3 ist dieser Vorgang durch die Verbindungslinie 1 schematisch dargestellt. Der dabei für die Hochgeschwindigkeits-Zubringerleitung mit der (geraden) internen Leitungsnummer "0" innerhalb des ersten Speichers RAM durchzuführende Schreibzyklus wird durch die Kippstufe K1 und den nachgeschalteten Vergleicher Vgl der Speicheranordnung ESP gesteuert (Fig.2).

Bei Auftreten der internen Leitungsnummer "0" auf der Leitungsanordnung L2 wird dabei für den betrachteten Abfragezyklus n die Kippstufe K1 auf den logischen Pegel
"0" gesetzt. Da der nachgeschaltete Vergleicher Vgl lediglich das niederwertigste Adreßbit der internen Leitungsnummer mit dem Ausgangssignal der Kippstufe K1 vergleicht, wird für den betrachteten Fall nur dann ein Ausgangssignal zur Steuerung eines Schreibzyklus von dem Vergleicher Vgl abgegeben, wenn das niederwertigste Adreßbit der internen Leitungsnummer einen logischen Pegel "0" wiedergibt, d.h. wenn eine gerade interne Leitungsnummer vorliegt. Die Durchführung eines solchen Schreibzyklus wird für die betreffende Hochgeschwindigkeits-Zubringerleitung auch als erster Abfragezyklus bezeichnet.

Die in dem betrachteten Abfragezyklus n von Hochgeschwindigkeits-Zubringerleitungen mit einer ungeraden internen Leitungsnummer, in diesem Fall also von der Hochgeschwindigkeits-Zubringerleitung mit der internen Leitungsnummer "1", stammenden Oktette werden direkt in den zweiten Speicher FIFO eingeschrieben (Verbindungslinie 2). Gleichzeitig wird innerhalb des ersten Speichers RAM ein Lesezyklus durchgeführt, in dessen Verlauf das für die jeweilige Hochgeschwindigkeits-Zubringerleitung bereits im vorangehenden Abfragezyklus n-1 in dem ersten Speicher RAM abgespeicherte Oktett ebenfalls in den zweiten Speicher FIFO übernommen wird. Der zuletzt genannte Vorgang ist in Fig. 3 durch die Verbindungslinie 2' dargestellt. Die beiden in der dargestellten Weise in den zweiten Speicher FIFO übernommenen Oktette werden in diesem zwischengespeichert, bis der Eingabecodierer ECW (Fig. 1) diese Oktette gemeinsam als paralleles Datensignalzeichen zur weiteren Bearbeitung übernimmt.

Im folgenden Abfragezyklus n+1 wird nun die Speicheranordnung ESP durch Umschalten der Kippstufe K1 in den zweiten stabilen Zustand - damit liegt am Ausgang der

0100535

Kippstufe K1 ein Logisch-1-Pegel an - derart gesteuert, daß nunmehr die Oktette von Hochgeschwindigkeits-Zubringerleitungen mit geraden internen Leitungsnummern, also gemäß dem Beispiel mit der internen Leitungsnummer "0", direkt in den zweiten Speicher FIFO übernommen werden und daß die für diese Leitungen bereits im Abfragezyklus n in dem ersten Speicher RAM zwischengespeicherten Oktette ebenfalls in den zweiten Speicher FIFO übernommen werden (Verbindungslinien 3 bzw. 3'). Der zuletzt dargestellte Ablauf kann für die betreffenden Hochgeschwindigkeits-Zubringerleitungen auch als zweiter Abfragezyklus bezeichnet werden. Auch hier werden die in den zweiten Speicher FIFO übernommenen Oktette in diesem zwischengespeichert, bis der Eingabecodierer ECW (Fig.1) diese Oktette leitungsindividuell als parallele Datensignalzeichen zur weiteren Bearbeitung übernimmt. Die von den Hochgeschwindigkeits-Zubringerleitungen mit einer ungeraden internen Leitungsnummer gelieferten Oktette, bei dem betrachteten Fall das Oktett von der Leitung mit der internen Leitungsnummer "1", werden bei diesem Abfragezyklus n+1 in dem ersten Speicher RAM abgespeichert (erster Abfragezyklus für diese Leitungen), da die den betreffenden Leitungen zugeordneten Speicherplätze des ersten Speichers RAM keine aktuellen Informationen mehr enthalten (Verbindungslinie 4).

Die gerade dargestellten Abläufe innerhalb der Speicheranordnung ESP wiederholen sich periodisch in sämtlichen nachfolgenden Abfragezyklen.

Es sei hier noch darauf hingewiesen, daß gleichzeitig mit den einzelnen Oktetten auch die internen Leitungsnummern für die betreffenden Hochgeschwindigkeits-Zubringerleitungen in den zweiten Speicher FIFO übernommen werden. Diese internen Leitungsnummern dienen dem nachgeschalteten Eingabecodierer ECW (Fig. 1) zur Identifizierung der jeweiligen Hochgeschwindigkeits-Zubringerleitungen.

Aus den vorstehenden Ausführungen geht hervor, daß lediglich bei jedem zweiten Abfragezyklus in dem zweiten Speicher FIFO weiterzuleitende Oktette bereitgestellt werden. Damit ist der nachgeschaltete Eingabecodierer ECW in der Lage, bei gleichbleibender Arbeitsgeschwindigkeit gegenüber einer sofortigen Weiterleitung der einzelnen Oktette die doppelte Anzahl von in Datensignalverbindungen einbezogenen Hochgeschwindigkeits-Zubringerleitungen gleichzeitig zu bearbeiten. Im übrigen arbeitet der Eingabecodierer ECW mit einer solchen Arbeitsgeschwindigkeit, daß der als Durchlaufspeicher ausgebildete zweite Speicher FIFO lediglich eine Speicherkapazität aufzuweisen braucht, die der halben Anzahl der an der Leitungsabfrageanordnung Mul angeschlossenen Hochgeschwindigkeits-Zubringerleitungen entspricht.

Bei dem zuvor erwähnten Ausführungsbeispiel werden die Schreibvorgänge und die Lesevorgänge in dem ersten Speicher RAM sowie die Schreibvorgänge in dem zweiten Speicher FIFO in Abhängigkeit von dem logischen Pegel des jeweils niederwertigsten Bits der von der Zähleranordnung T bereitgestellten internen Leitungsnummern gesteuert.

Zur Steuerung der gerade erwähnten Vorgänge kann auch anstelle des niederwertigsten Bits ein beliebiges, bei jeder Bereitstellung aufeinanderfolgender interner Leitungsnummern sich änderndes Bit herangezogen werden. Diese Art der Steuerung ist insbesondere dann zweckmäßig, wenn im Zuge eines Abfragezyklus die internen Leitungsnummern von der Zähleranordnung T in einer von der in Fig. 3 dargestellten Reihenfolge abweichenden Reihenfolge abgegeben werden.

4 Patentansprüche / 3 Figuren

## Patentansprüche

1. Schaltungsanordnung zur Aufnahme von auf Hochgeschwindigkeits-Zubringerleitungen (NKan1 bis NKanx) auftretenden Datensignalen und Weiterleitung dieser Datensignale über Hochgeschwindigkeits-Abnehmerleitungen (NKab1 bis NKabx) in einem wenigstens eine Zeitvielfach-Datenvermittlungsanlage umfassenden Datenvermittlungsnetz, in welchem jeder Zeitvielfach-Datenvermittlungsanlage eine gesonderte, von dieser Datenvermittlungsanlage her steuerbare Koppeleinrichtung (K) zugehörig ist, über die die genannten Datensignale vermittelt werden, wobei die Koppeleinrichtung (K) einen Durchschaltespeicher (DS) mit den Hochgeschwindigkeits-Zubringerleitungen individuell zugeordneten Speicherplätzen aufweist, in denen von der Zeitvielfach-Datenvermittlungsanlage her Adressen der in Frage kommenden Hochgeschwindigkeits-Abnehmerleitungen für die Weiterleitung der genannten Datensignale bereitgestellt werden, und wobei der Durchschaltespeicher zum Adressieren seiner Speicherplätze und zum Wirksamschalten der in Frage kommenden Hochgeschwindigkeits-Abnehmerleitungen eingangsseitig mit einem Eingabecodierer (ECW) und ausgangsseitig mit einem Ausgabecodierer (ACW) verbunden ist,                    d a -
d u r c h   g e k e n n z e i c h n e t , daß der Eingabecodierer (ECW) eingangsseitig mit einer an einer zyklisch arbeitenden Leitungsabfrageanordnung (Mul) angeschlossenen Speicheranordnung (ESP) verbunden ist, in der die durch die Leitungsabfrageanordnung von den in Datensignalverbindungen einbezogenen Hochgeschwindigkeits-Zubringerleitungen (NKan1 bis NKanx) aufgenommenen Datensignalen zu mehrere Bitgruppen umfassenden parallelen Datensignalzeichen leitungsindividuell aufgesammelt werden und die jeweils erst nach Eintreffen der letzten zu einem Datensignalzeichen gehörenden Bitgruppe dem Eingabecodierer (ECW) das vollständige Datensignalzeichen zur Weiterleitung an die in Frage kommende Hochgeschwindigkeits-Abnehmerleitung bereitstellt.

2. Schaltungsanordnung nach Anspruch 1, d a d u r c h
g e k e n n z e i c h n e t , daß die Speicheranordnung
(ESP) einen ersten Speicher (RAM) mit wahlfreiem Zugriff
und einen als Durchlaufspeicher ausgelegten zweiten
Speicher (FIFO) enthält,
daß der erste Speicher (RAM) zum leitungsindividuellen
Aufsammeln von Bitgruppen dient, die auf den in Datensignalverbindungen einbezogenen Hochgeschwindigkeits-
Zubringerleitungen auftreten,
und daß der zweite Speicher (FIFO) bei bzw. nach Eintreffen der letzten zu einem Datensignalzeichen gehörenden
Bitgruppe von einer Hochgeschwindigkeits-Zubringerleitung her die bis dahin für die betreffende Hochgeschwindigkeits-Zubringerleitung in dem ersten Speicher (RAM)
gespeicherte(n) Bitgruppe(n) übernimmt und diese zusammen mit der zuletzt aufgenommenen Bitgruppe dem Eingabecodierer (ECW) als paralleles Datensignalzeichen bereitstellt.

3. Schaltungsanordnung nach Anspruch 2, d a d u r c h
g e k e n n z e i c h n e t , daß mit dem ersten Speicher
(RAM) und dem zweiten Speicher (FIFO) eine Steueranordnung (G1 bis G3, K1, Vgl) verbunden ist, die die genannten Speicher (RAM, FIFO) im Zuge jeweils zweier aufeinanderfolgender Abfragezyklen ansteuert,
daß in dem die Abfrage sämtlicher Hochgeschwindigkeits-
Zubringerleitungen umfassenden ersten Abfragezyklus der
Leitungsabfrageanordnung (Mul) die von den Hochgeschwindigkeits-Zubringerleitungen her zugeführten Bitgruppen
leitungsindividuell in dem ersten Speicher (RAM) zwischengespeichert werden
und daß in dem dem ersten Abfragezyklus folgenden zweiten Abfragezyklus die auf den Hochgeschwindigkeits-Zubringerleitungen auftretenden Bitgruppen zusammen mit den zugehörigen, bereits in den ersten Speicher eingeschriebenen Bitgruppen als Datensignalzeichen in den zweiten Speicher gespeichert werden.

4.Schaltungsanordnung nach Anspruch 3, d a d u r c h g e k e n n z e i c h n e t , daß die Hochgeschwindigkeits-Zubringerleitungen in zwei Gruppen unterteilt sind, für deren eine der jeweilige Abfragezyklus als erster Abfragezyklus dient und für deren andere der betreffende Abfragezyklus als zweiter Abfragezyklus dient.

FIG 1

FIG 2

FIG 3